# EUROPÄISCHE PATENTANMELDUNG

(11) **EP 4 299 304 A1**
(43) Veröffentlichungstag der Anmeldung: **03.01.2024**
(21) Anmeldenummer: 22181997.2
(22) Anmeldetag: 29.06.2022
(51) Int. Cl.: B32B 3/12, B32B 5/02, B32B 5/18, B32B 5/32, B32B 15/04, B32B 21/04

(54) **SANDWICH-SANDWICH**

(71) Anmelder: Airbus Operations GmbH, 21129 Hamburg (DE)
(72) Erfinder: Witte, Tassilo, 21129 Hamburg (DE); Jarczyk, Robert, 21129 Hamburg (DE)

(57) **Zusammenfassung**

Verbund aus wenigstens vier Schichten umfassend eine innen angeordnete Kernschicht, zwei außen angeordnete Deckschichten und zwischen Kern- und einer Deckschicht angeordnete Zwischenschicht.

## Beschreibung

Die Erfindung betrifft neuartige Leichtbaustrukturen, die insbesondere für den Einsatz im Flugzeugbau geeignet sind.

### Beschreibung

Es ist kein Geheimnis, das im Flugzeugbau Materialien verwendet werden, die zugleich dauerhaft, leichtgewichtig und toleranzarm herstellbar sind. Die Anforderungen an Toleranzen im Flugzeugbau sind sehr gering. Weiterhin sind Gewichtseinsparungen stets willkommen, um die Nutzlast des Fluggerätes zu erhöhen bzw. die spezifischen Treibstoffkosten beim Betrieb des Flugzeugs zu verringern.

Unter den Leichtbaumaterialien spielen Verbundwerkstoffe neben Leichtmetallwerkstoffen eine wichtige Rolle. Verbundwerkstoffe bestehen aus verschiedenen Materialien, die in einer Weise kombiniert werden, sodass von den Rohmaterialien stark abweichende vorteilhafte Eigenschaften erzielt werden können. Verbundwerkstoffe sind beispielsweise faserverstärkte Kunststoffe wie glasfaserverstärkter Kunststoff (GFK) oder kohlenstofffaserverstärkter Kunststoff (CFK). Verstärkungsfasern können dabei Glas- , Natur-, Basalt-, Aramid- oder Kohlenstofffasern sein.

Aus solchen faserverstärkten Kunststoffen können sogenannte Verbunde oder Sandwichmaterialien aufgebaut werden. Unter Verbunden oder Sandwichmaterialien versteht man z.B. ein beiderseits mit harten Deckschichten verbundenes druckfestes Kernmaterial. Als Kernmaterialien können Schäume oder Waben zum Einsatz kommen, als Deckschichten Laminate aus Glas- , Natur-, Basalt-, Aramid- oder Kohlenstofffasern.

So sind beispielsweise die Bodenplatten in Flugzeugkabinen oft aus mit Kohlenstofffaserlaminat belegten Wabenkernen aus duromerharzgetränktem Kevlar-Papier (Nomex) hergestellt. In der Flugzeugkabine können die Kabinenwände der Flugzeugkabine, wie auch Gepäckfächer oder Schränke aus solchen Sandwich Materialien hergestellt werden. Dabei kommt meist eine Deckschicht aus glasfaserverstärktem Kunststoff zum Einsatz und als Kernmaterial die bereits genannten Waben. Eine solche Anordnung wird auch als Honeycomb-Sandwich Material bezeichnet.

Solche Materialien sind zwar recht leicht, weisen aber auch eine gewisse Empfindlichkeit gegenüber punktuellen Belastungen auf. So ist vorstellbar, dass eine Optimierung von Sandwich Materialien auf eine besonders leichte Ausführung hin zugleich Nachteile hinsichtlich der mechanischen Eigenschaften mit sich zieht, beispielsweise eine verringerte Widerstandsfähigkeit von Fußbodenplatten gegenüber Pfennigabsätzen. Es hat daher nicht an Versuchen gefehlt, derartige Sandwichmaterialien zugleich leichter und widerstandsfähiger zu machen.

Weiterhin sind die Wabenkerne mit verarbeitungstechnischen Herausforderungen verbunden: insbesondere bei relativ großen Waben kann es vorkommen, dass bei der Herstellung der Sandwichmaterialien die Deckschicht nicht plan auf dem Kern aufliegt, sondern in die Deckschicht zum Teil in die Waben hinein einsackt, sodass eine leicht ondulierte Oberfläche entsteht. Diese kann in der Regel nur durch Spachteln plan gemacht werden, was wiederum mit zusätzlichem Gewicht verbunden ist.

Nicht zuletzt gibt es Situationen, in denen nur einseitig eine besonders hohe Druckfestigkeit erforderlich ist, beispielsweise bei bestimmten Flugzeugkabinenwänden oder auch bei Surfbrettern: In beiden Fällen treten üblicher Weise Druckkräfte oder Stöße nur auf der Seite des Bauteils auf, auf der sich die Benutzer bzw. Passagiere aufhalten, da deren Bewegungen oder Kräfte von Gepäckstücken oder Körperteilen nur auf die zugängliche Seite des Bauteils einwirken können.

Es hat sich nun für den Fachmann völlig unvorhersehbar herausgestellt, dass ein Verbund aus wenigstens vier Schichten umfassend eine innen angeordnete Kernschicht (K), zwei außen angeordnete Deckschichten (D1, D2) und zwischen Kern- und einer Deckschicht (D1) angeordnete Zwischenschicht (Z1) den Nachteilen des Standes der Technik abhilft, ebenso wie ein Verbund aus wenigstens fünf Schichten umfassend eine innen angeordnete Kernschicht (K), zwei außen angeordnete Deckschichten (D1, D2) und zwischen Kern- und Deckschichten angeordnete Zwischenschichten (Z1, Z2).

Durch solche Strukturen kann die Empfindlichkeit von Verbunden (auch als Sandwichmaterialien bezeichnet) verringert werden und es kann gleichzeitig ein insgesamt leichterer Kern verwendet werden, was zu Gewichtseinsparungen führt. Verbunde weisen einen Faservolumenanteil von 20 bis 65%, bevorzugt 40 bis 60%auf, wobei gewollte Kavitäten wie Waben-, Wellenhohlräume oder Schaumzellen nicht mitgerechnet werden. Als Kernmaterialien können hierbei leichtere, weniger druckfeste Schäume zum Einsatz kommen. Alternativ können auch Waben mit größeren Abmessungen oder aus dünnerem Papier hergestellte Waben oder auch Wellen verwendet werden. Wichtig ist dabei, dass die außenliegenden dünneren Schäume im Zusammenspiel mit den Deckschichten, mit denen sie innig verbunden sind, einwirkende Drücke bzw. Kräfte aufnehmen und vergleichmäßigt auf das Kernmaterial übertragen. Lokale Drucklasten werden somit besser verteilt. Da die äußeren Schäume eine weit geringere Stärke aufweisen, kann der damit möglicherweise verbundene Gewichtsnachteil hingenommen werden, insgesamt entsteht ein stabilerer Sandwichkern. Sowohl die Anbindung der Deckschichten auf einen so gestalteten Sandwichkern wird verbessert, wie auch die Neigung des Durchhängens der aufgelegten Deckschichten beseitigt. Verwendet man als inneres Kernmaterial einen Wabenkern und belegt diesen mit dünnem Schaummaterial, so kombiniert man die vorteilhaften Eigenschaften des leichten Wabenkerns mit denen des einwirkende Kräfte besonders gut verteilenden Schaums und erhält insgesamt ein stark verbessertes Kernmaterial für Sandwichstrukturen. Zugleich wird dabei die Haftung der Deckschichten mit dem Sandwichmaterial stark verbessert, wodurch eine geringere Neigung zur Delaminierung, also zur Trennung von Deckschicht und Kernmaterial erreicht wird. Demgegenüber bestehen bekannte Sandwichmaterialien nur aus drei Schichten und gegebenenfalls einer dekorativen Schicht, etwa Dekorfolie, Topcoat, Gelcoat oder einem Anstrich. Durch erfindungsgemäße Verbunde wird dabei ein freileitungsartiges Durchhängen der Decklage in die einzelnen Wabenzellen hinein, auch als "Telegraphing" der Decklage bezeichnet, verringert. Außerdem dient die Zwischenschicht als lastverteilende "Pufferschicht", wodurch leichtere Kernwerkstoffe in der Mittelschicht eingesetzt werden können. Vorteilhaft können die Zwischenschichten aus weniger druckfestem Material gewählt werden, was zu Gewichtseinsparungen führt. Die Druckfestigkeit der Zwischenschicht kann vorteilhaft nur 1/6 bis ¼ der Druckfestigkeit der Kernschicht betragen. Falls erforderlich können selbstverständlich auch Zwischenschichten mit höherer Druckfestigkeit verwendet werden, so kann diese mehr als ¼, ähnlich oder höher als die Druckfestigkeit der Kernschicht betragen bzw. sein.

Beide Varianten machen von der gleichen erfinderischen Idee Gebrauch, druckverteilende Zwischenschichten zu verwenden. Ist eine Einwirkung von insbesondere punktuellen Kräften nur einseitig vorstellbar wie im Fall einer Wandverkleidung, so kann zur weiteren Gewichtseinsparung die Variante mit nur einer Zwischenschicht verwendet werden.

Bei all dem ist es bevorzugt, wenn die Deckschichten (D1, D2) aus Metall, Kunststoff, Holz, oder Laminaten daraus bestehen. Weiterhin ist es bevorzugt, wenn die Deckschichten (D1, D2) aus elastomerbeschichtetem Metall, Metall, faserverstärktem Kunststoff, oder Laminaten aus Metall und faserverstärktem Kunststoff bestehen. Dadurch kann insbesondere in Flugzeug-Laderäumen die Impactfestigkeit deutlich erhöht werden, mehr noch als durch eine Schaum-Deckschickt, aber zum Nachteil des höheren Gewichtes im Fall von Elastomeren. Weiterhin ist es bevorzugt, wenn die Kernschicht (K) aus Holz, Schaum, Waben oder Wellen mit einer Dichte von höchstens 80 kg/m³, bevorzugt höchstens 20 kg/m³ besteht. Weiterhin ist es bevorzugt, wenn die Zwischenschichten (Z1, Z2) aus Holz, Schaum, Waben oder Waben mit einer Deckschicht (D') oder Kombinationen daraus bestehen. Weiterhin ist es bevorzugt, wenn die Zwischenschichten (Z1, Z2) aus Schaum bestehen. Weiterhin ist es bevorzugt, wenn weitere Deckschichten (D'1, D'2) zwischen den Zwischenschichten (Z1, Z2) und der Kernschicht (K) angeordnet sind. Weiterhin ist es bevorzugt, wenn die Zwischenschichten (Z1, Z2) eine vertikale Stärke von jeweils höchstens 15%, bevorzugt höchstens 30% der zusammengenommenen vertikalen Stärke der Kernschicht (K) und der Zwischenschichten (Z1, Z2) aufweisen. Die Erfindung umfasst auch ein Luftfahrzeug, eine Luftfahrzeugkabinenoberfläche, Rutsch- oder Rollbrett mit einem erfindungsgemäßen Verbund. Dabei können Luftfahrzeuge Flugzeuge, Lufttaxis, Hubschrauber, Raumkapseln oder Raketen umfassen; Luftfahrzeugkabinenoberflächen können Wände, Decken, Böden oder Oberflächen von Einbauten wie Staufächern, Sitzen, Schränken von Passagier-, Lager-oder Frachträumen umfassen; Rutsch- oder Rollbretter können Bretter zum Wellenreiten, Windsurfen, Kitesurfen, Schlickrutschen, Bodyboarden oder Skate- oder Longboards umfassen.

Ausführungsformen der Erfindung werden nachfolgend dargestellt.

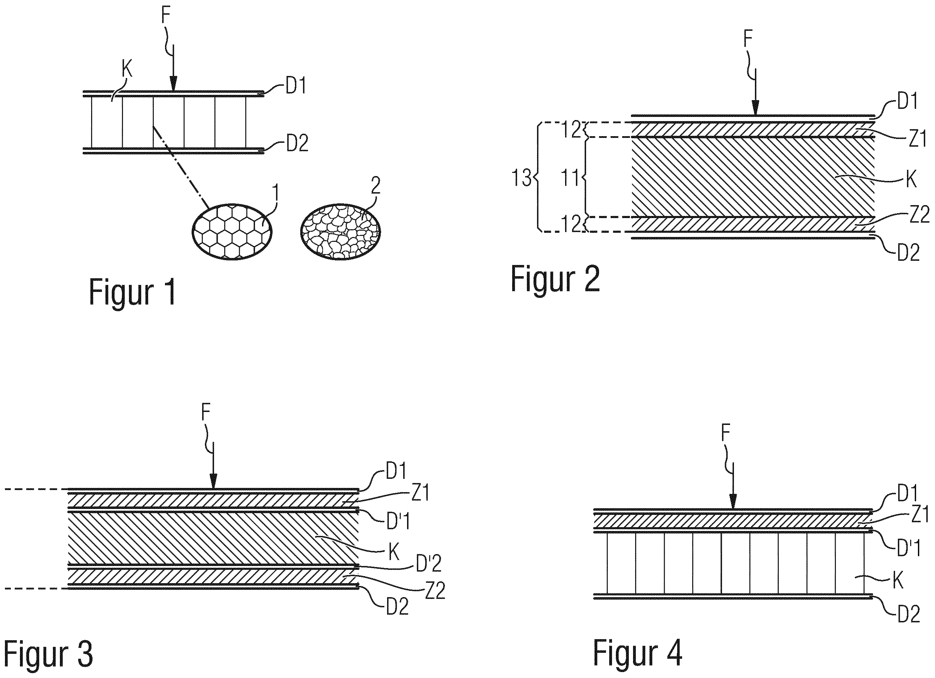

In Figur 1 ist ein herkömmlicher Verbund aus zwei Deckschichten sowie einer Kernschicht dargestellt. Figur 2 zeigt einen erfindungsgemäßen Verbund. Figur 3 zeigt eine weitere Variante des erfindungsgemäßen Verbundes. In Figur 4 ist eine weitere, vereinfachte Variante eines erfindungsgemäßen Verbundes dargestellt.

Figur 1 zeigt einen herkömmlichen Verbund mit einem Kernmaterial K und oben und unten liegenden Deckschichten D1 und D2. Ein solcher Verbund weist eine höhere Knickfestigkeit gegen eine orthogonal auf eine Deckschicht bzw. den Verbund einwirkende Kraft F auf. Die Widerstandsfähigkeit gegen eine so entstehende Knickbelastung ist deutlich größer als die einer einfachen Platte der doppelten Wandstärke der Deckschicht D1. In der Regel sind die Deckschichten D1 und D2 gleich stark ausgeführt.

Das Kernmaterial kann ein Wabenkern 1 mit bienenwabenartigen Stützstrukturen sein, deren offene Kanäle orthogonal zu den Deckschichten angeordnet sind. Eine andere Möglichkeit für ein Kernmaterial K kann ein Schaumwerkstoff 2 sein. Ein solcher Schaumwerkstoff 2 besteht aus einem gerüstbildenden Material, oft ein Kunststoff, welches Gaszellen umschließt. Eine dritte Möglichkeit für ein Kernmaterial K stellt leichtes Holz, etwa Balsaholz, dar. Dieses kann entweder als Holzplatte eingesetzt werden, oder es werden einzelne Chips verwendet, die einen gewissen Abstand voneinander aufweisen. Durch letzteres kann erreicht werden, dass die Struktur nicht ausschließlich planar hergestellt werden kann.

Bei allen Kernmaterialien K ist entscheidend für die Stabilität des Verbundes gegen orthogonal einwirkende Kräfte F, dass die Kernmaterialien K in Richtung der einwirkenden Kraft F eine ausreichende Druckfestigkeit aufweisen. Je leichter man versucht die Kernmaterialien auszuführen, desto geringer wird bei gleichem Material in der Regel die Druckfestigkeit und damit die Stabilität des gesamten Verbundes ausfallen. Bekannte Möglichkeiten zur Verringerung des Gewichts des Kernmaterials sind im Fall von Wabenkernen die Verwendung von dünneren, also leichterem Wabenmaterial sowie die geometrische Vergrößerung der Waben.

Weiterhin kommt es bei Waben als Kernmaterial K zu der optisch weniger bevorzugten Erscheinung, dass ein Teil der Deckschicht durch den Verarbeitungsprozess in einzelne Waben hinein gewölbt wird. Letzteres wird dadurch gefördert, dass die Deckschichten unter Druck auf das Kernmaterial aufgebracht werden.

Versucht man anstatt Wabenkernen 1 Schaumkerne 2 zu verwenden, so ist man mit bei gleicher Druckfestigkeit des Verbundes mit einem höherem Gesamtgewicht konfrontiert, sodass sich in bestimmten Technikbereichen Wabenkerne auf breiter Front durchgesetzt haben, wie beispielsweise im Flugzeug- oder Surfbrettbau.

Figur 2 zeigt erfindungsgemäßen Verbund aus einer Kernschicht K, zwei auf beiden Seiten der Kernschicht K angeordneten Zwischenschichten Z1 und Z2 sowie zwei Deckschichten D1 und D2, die jeweils an die Zwischenschichten Z1 und Z2 anschließen.

Ein solcher Verbund weist gegenüber einem Verbund ohne Zwischenschichten Z1 und Z2 eine verbesserte Widerstandsfähigkeit gegen orthogonal einwirkende Kräfte F auf, ohne dass dies durch erhebliche Gewichtsnachteile erkauft wird.

Die Stärke 12 der beiden Zwischenschichten Z1 und Z2 ist deutlich geringer als die Stärke der Kernschicht 11 und macht einen unterdurchschnittlichen Anteil an der gesamten Schichtstärke der Kern- und Zwischenschichten 13 aus.

Figur 3 zeigt eine Variante der erfindungsgemäßen Verbundes. in dieser Variante schließt sich beiderseits der Kernschicht K eine Deckschicht D'1 bzw. D'2 an. Auf diese folgt jeweils eine Zwischenschicht Z1 bzw. Z2, die wiederum von einer Deckschicht D1 bzw. D2 abgeschlossen werden.

Auf diese Weise können auch gut Kern- und Zwischenschichten aus unterschiedlichen Waben verwendet werden, ohne dass die Probleme der nicht ganz ebenen Oberflächen der Deckschichten D1 und D2 durch Einsinken von Deckschicht Material in die Waben der Zwischenschichten auftreten. Dies wird dadurch hervorgerufen, dass die Zwischenschichten Z1 und Z2 mit einer höheren Druckfestigkeit eine geringere Größe der Waben in den Zwischenschichten erfordern.

Die Zwischenschichten Z1 und Z2 können auch aus Schaum hergestellt werden. Auch dann kann das Anordnen der inneren Deckschichten D'1 und D'2 sinnvoll sein, um die Haftung des Wabenkern K an den Zwischenschichten Z1 und Z2 zu verbessern.

Ebenso können sowohl Kernschicht K als auch Zwischenschichten Z1 und Z2 aus Schaum hergestellt werden; auch dann kann das Anordnung der inneren Deckschichten D'1 und D'2 sinnvoll sein, ist besondere wenn die Schaummaterialien in ihren sonstigen Eigenschaften, wie etwa Dampfdurchlässigkeit oder Porosität stark voneinander abweichen.

Figur 4 zeigt eine vereinfachte Variante der erfindungsgemäßen Verbunde, bei denen die Zwischenschicht auf der einen Seite fehlt.

Ein solcher Verbund weist eine Kernschicht auf, die einseitig mit einer Deckschicht D2 belegt ist und auf der anderen Seite optional mit einer Zwischendeckschicht D'1, darauf folgend mit einer Zwischenschicht Z1 und einer außenliegenden Deckschicht D2.

Eine solche Anordnung ist dann vorteilhaft, wenn die einwirkende Kraft F nur von einer Seite auftritt, wie dies beispielsweise bei Flugzeugkabinenverkleidungen der Fall ist: In diesem Fall befindet sich der Passagier auf der Seite der Deckschicht D1 und es ist wenig fernliegend, dass durch Kontakt mit Taschen oder Körperteilen, wie etwa Füßen und Ellenbogen, Kräfte auf die Deckschicht D2 einwirken, die eine Knickbelastung des Verbundes hervorrufen. Da auf der Rückseite, also der der Deckschicht D2 abgewandten Seite die eigentliche Flugzeugbordwand angeordnet ist, sind von dieser Seite keine derartigen Krafteinwirkungen zu erwarten und die Zwischenschicht Z2 kann entfallen. Eine solche Anordnung ist zwar nicht symmetrisch und weist dadurch gegenüber klassischen Verbunden, die auf beiden Seiten gleichartig aufgebaut sind, eine verringerte Knickstabilität gegenüber Kräften F auf. Dies kann aber zur Erzielung von Gewichtseinsparungen hingenommen werden.

Etwas Ähnliches kann auch im Fall von bestimmten Sportgeräten sinnvoll sein, wie etwa bei Surfbrettern: Der Sportler steht nur auf der oberen Deckschicht und übt über seine Füße Kräfte auf den Verbund aus. Dagegen ist auf der Unterseite des Bretts in aller Regel Wasser, welches keine punktuellen Kräfte auf das Brett einwirken lässt. Daher ist auch in diesem Fall vorstellbar, dass die Knickfestigkeit des Verbundes auf der Oberseite deutlich höher ausgeführt werden muss, als auf der Unterseite.

**Bezugszeichenliste**

| | |
|---|---|
| K | Kernmaterial, Kernschicht |
| F | einwirkende Kraft |
| D1 | Deckschicht |
| D2 | Deckschicht |
| Z1 | Zwischenschichten |
| Z2 | Zwischenschichten |
| D'1 | innere Deckschicht |
| D'2 | innere Deckschicht |
| 1 | Wabenkern, Wabe |
| 2 | Schaumkern Stärke der Kernschicht, Schaumwerkstoff |
| 11 | Stärke der Kernschicht |
| 12 | Stärke der Zwischenschicht |
| 13 | gesamten Schichtstärke der Kern- und Zwischenschichten |

## Patentansprüche

1. Verbund aus wenigstens vier Schichten umfassend eine innen angeordnete Kernschicht (K), zwei außen angeordnete Deckschichten (D1, D2) und zwischen Kern- und einer Deckschicht (D1) angeordnete Zwischenschicht (Z1).

2. Verbund aus wenigstens fünf Schichten umfassend eine innen angeordnete Kernschicht (K), zwei außen angeordnete Deckschichten (D1, D2) und zwischen Kern- und Deckschichten angeordnete Zwischenschichten (Z1, Z2).

3. Verbund nach Anspruch 1 oder 2 **dadurch gekennzeichnet, dass** die Deckschichten (D1, D2) aus Metall, Kunststoff, Holz, oder Laminaten daraus bestehen.

4. Verbund nach Anspruch 1 oder 2 **dadurch gekennzeichnet, dass** die Deckschichten (D1, D2) aus elastomerbeschichtetem Metall, Metall, faserverstärktem Kunststoff, oder Laminaten aus Metall und faserverstärktem Kunststoff bestehen.

5. Verbund nach einem der vorangehenden Ansprüche **dadurch gekennzeichnet, dass** die Kernschicht (K) aus Holz, Schaum, Waben oder Wellen mit einer Dichte von höchstens 80 kg/m³, bevorzugt höchstens 20 kg/m³ besteht.

6. Verbund nach einem der vorangehenden Ansprüche **dadurch gekennzeichnet, dass** die Zwischenschichten (Z1, Z2) aus Holz, Schaum, Waben oder Waben mit einer Deckschicht (D') bestehen.

7. Verbund nach Anspruch 5 **dadurch gekennzeichnet, dass** die Zwischenschichten (Z1, Z2) aus Schaum bestehen.

8. Verbund nach einem der vorangehenden Ansprüche **dadurch gekennzeichnet, dass** weitere Deckschichten (D'1, D'2) zwischen den Zwischenschichten (Z1, Z2) und der Kernschicht (K) angeordnet sind.

9. Verbund nach einem der vorangehenden Ansprüche **dadurch gekennzeichnet, dass** die Zwischenschichten (Z1, Z2) eine vertikale Stärke von jeweils höchstens 15%, bevorzugt höchstens 30% der zusammengenommenen vertikalen Stärke der Kernschicht (K) und der Zwischenschichten (Z1, Z2) aufweisen.

10. Luftfahrzeug, Luftfahrzeugkabinenoberfläche, Rutsch- oder Rollbrett mit einem Verbund nach einem der vorangehenden Ansprüche.
